# EUROPÄISCHE PATENTSCHRIFT

(11) **EP 0 849 652 B1**
(45) Veröffentlichungstag und Bekanntmachung des Hinweises auf die Patenterteilung: **04.04.2001**
(21) Anmeldenummer: 97117650.8
(22) Anmeldetag: 11.10.1997
(51) Int. Cl.: G04G 15/00, B60R 16/02

(54) **Verfahren zur Verwaltung von Weckzeiten und Vorrichtung zur Ausführung dieses Verfahrens**
Method for managing time-controlled operations and device for performing said method
Procédé pour administrer des événements basés sur le temps et dispositif pour l'exécution de ce procédé

(30) Priorität: 18.12.1996 DE 19652617
(43) Veröffentlichungstag der Anmeldung: 24.06.1998
(73) Patentinhaber: ROBERT BOSCH GMBH, 70442 Stuttgart (DE)
(72) Erfinder: Milkner, Ralf, 71263 Weil der Stadt (DE); Kloos, Alfred, 71287 Weissach (DE)

(56) Entgegenhaltungen:
- EP-A- 0 549 005
- US-A- 3 836 887
- US-A- 4 318 181
- US-A- 5 563 452

## Beschreibung

### Stand der Technik

Die Erfindung betrifft ein Verfahren zur Verwaltung von Weckzeiten in einem vernetzten Verbund aus mehreren Steuervorrichtungen und einer Uhr-Steuervorrichtung. Desweiteren betrifft die Erfindung einen vernetzten Verbund aus mehreren Steuervorrichtungen und einer Uhr-Steuervorrichtung für ein Kraftfahrzeug, wobei jede Steuervorrichtung und die Uhr-Steuervorrichtung eine Speichervorrichtung zur Aufnahme von Weckzeiten umfaßt.

In modernen Kraftfahrzeugen werden in zunehmendem Maße Steuergeräte eingesetzt, die beispielsweise über einen sogenannten CAN-Bus miteinander vernetzt sind. Die Steuergeräte dienen den unterschiedlichsten Funktionen, wobei beispielsweise die Steuerung der Standheizung als ein Beispiel zu nennen ist. Viele der eingesetzten Steuergeräte, wie beispielsweise auch das Standheizungs-Steuergerät, benötigen eine Zeitbasis, die die Uhrzeit und bei Bedarf das Datum liefert, um bestimmte zeitabhängige Aufgaben auszuführen. Bisher verfügte jedes Steuergerät über eine eigene Zeitbasis, wobei eine Synchronisation aller Zeitbasen im Netzwerk durchzuführen ist. Aufgrund der Komplexität und des Hardwareaufwands für die mehrmals in einem Netzwerk vorhandenen Zeitbasen, ist man dazu übergegangen, eine Zeitbasis zentral im Netzwerk zu betreiben. Diese zentrale Zeitbasis hat die Aufgabe, steuerungsrelevante Zeitdaten (im folgenden Weckzeiten genannt) zu verwalten und die aktuelle Zeit für alle im Netz vorhandenen Steuergeräte bereitzustellen.

So ist es aus dem Stand der Technik beispielsweise bekannt, sämtliche Weckzeiten aller im Netz vorhandenen Steuergeräte von einem Zeitbasis-Steuergerät (im folgenden Uhr-Steuergerät genannt) verwalten zu lassen. So wird beispielsweise das Standheizungs-Steuergerät die Ein- und Ausschaltzeiten dem Uhr-Steuergerät mitteilen, das dann bei Erreichen des entsprechenden Zeitpunkts eine Nachricht an das Standheizungs-Steuergerät abschickt und dieses zur Auslösung der entsprechenden Aktion veranlaßt. Bei einer Vielzahl von Steuergeräten in einem Netzwerk führt dieses Vorgehen jedoch zu einem ganz erheblichen Aufwand für Verwaltung und Speicherung der Weckzeiten.

Eine Verbesserung ergibt sich dann, wenn das Uhr-Steuergerät jeweils nur die aktuellste Weckzeit jedes Steuergeräts verwaltet. Hierbei muß jedes Steuergerät immer nur die nächste Weckzeit an das Uhr-Steuergerät übertragen. Bei Erreichen der Weckzeit wird das Steuergerät "geweckt", das daraufhin seine Aktion ausführt und dem Uhr-Steuergerät die nächste Weckzeit (sofern vorhanden) mitteilt. Daraus ergibt sich, daß das Uhr-Steuergerät für jedes zu weckende Steuergerät nur noch eine Uhrzeit abspeichern muß. Der Nachteil dieser Lösung besteht jedoch darin, daß das Uhr-Steuergerät für jedes im Netzwerk vorhandene Steuergerät einen Speicherplatz verwalten muß, so daß sich mit jedem neu hinzukommenden Steuergerät der Speicherbedarf erhöht und der Speicherverwaltungsaufwand entsprechend zunimmt.

### Vorteile der Erfindung

Das Verfahren mit den Merkmalen des Anspruchs 1 beziehungsweise der vernetzte Verbund mit den Merkmalen des Anspruchs 4 haben demgegenüber den Vorteil, daß der Aufwand für Verwaltung und Speicherung der Weckzeiten sich auf ein Minimum reduzieren läßt und somit eine kostengünstige und modulare Realisierung möglich wird. Dadurch, daß das Uhr-Steuergerät nurmehr eine Weckzeit speichert und die übrigen Weckzeiten dezentral in den Steuergeräten abgelegt sind, ist der Verwaltungsaufwand minimal.

Weitere vorteilhafte Ausgestaltungen der Erfindung ergeben sich aus den Unteransprüchen.

### Zeichnungen

Die Erfindung wird nun anhand eines Ausführungsbeispiels mit Bezug auf die Figuren näher beschrieben. Dabei zeigen:
- Figur 1: eine schematische Darstellung eines vernetzten Verbunds,
- Figuren 2a bis c: Flußdiagramme zur Verdeutlichung der einzelnen Verfahrensabläufe im Uhr-Steuergerät, und
- Figuren 3a bis c: Flußdiagramme zur Verdeutlichung der einzelnen Verfahrensabläufe im Steuergerät.

### Ausführungsbeispiel

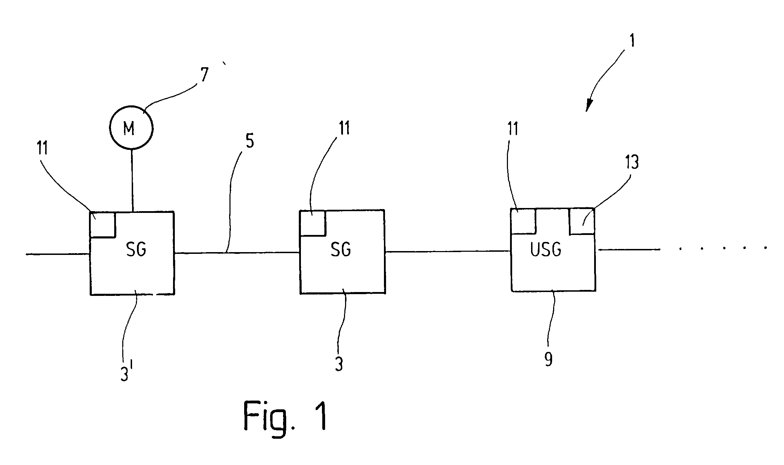

In Figur 1 ist schematisch ein Ausschnitt eines Verbunds 1 dargestellt, der aus einer Vielzahl von Steuergeräten 3 besteht. Einsatz findet ein solcher Verbund 1 beispielsweise in einem Kraftfahrzeug. Die Steuergeräte 3 sind über einen sogenannten CAN-Bus 5 miteinander verbunden, so daß eine Kommunikation zwischen den einzelnen Steuergeräten 3 möglich ist. Die Steuergeräte 3 übernehmen die unterschiedlichsten Funktionen innerhalb des Kraftfahrzeugs, wobei beispielsweise die Ansteuerung einer Standheizung dazu gehört. Beispielhaft ist in Figur 1 ein Stellmotor 7 dargestellt, der vom Steuergerät 3' angesteuert wird und eine oder mehrere Lüftungsklappen der Heizung für den Betrieb der Standheizung betätigt.

Der in Figur 1 dargestellte Verbund 1 weist darüber hinaus ein Uhr-Steuergerät 9 auf, das ebenfalls am CAN-Bus 5 angeschlossen ist. Dieses Uhr-Steuergerät 9 unterscheidet sich von den vorgenannten Steuergeräten 3 insofern, als es eine Zeitbasis umfaßt. Die Zeitbasis liefert neben der aktuellen Uhrzeit auch das Datum, was beispielsweise für die zeitgesteuerte Standheizung des Fahrzeugs benötigt wird.

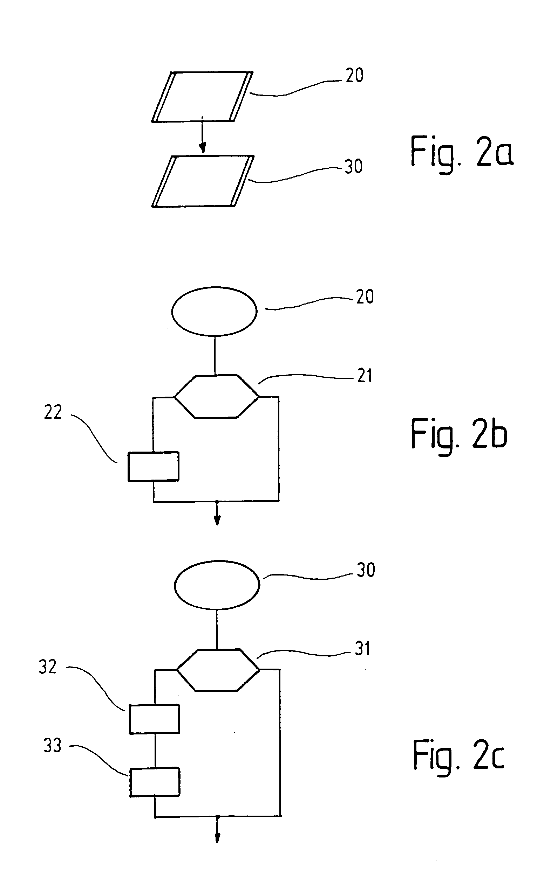

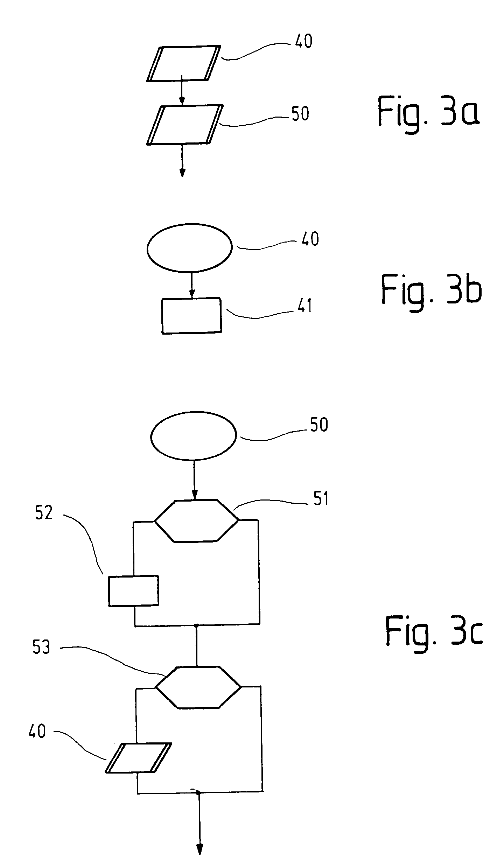

So läßt beispielsweise ein modernes Standheizungssystem die Eingabe von unterschiedlichen Ein- und Ausschaltzeiten mit der entsprechenden Datumsangabe zu. Diese Daten werden zunächst in dem Steuergerät 3' in einer Speichervorrichtung 11 abgelegt. Diese rein schematisch angedeutete Speichervorrichtung 11 ist in jedem Steuergerät 3 sowie in dem Uhr-Steuergerät 9 vorhanden. Zusätzlich umfaßt das Uhr-Steuergerät 9 eine ebenfalls nur schematisch angedeutete Vergleichs- und Auswahlvorrichtung 13, die aus einer Vielzahl von Zeitdaten (Weckzeiten) die der aktuellen Zeit am nächsten kommende Weckzeit auswählt. Die Verwaltung der Weckzeiten in einem vernetzten Verbund soll nun im folgenden anhand der Flußdiagramme gemäß Figuren 2a bis c und 3a bis c näher erläutert werden. Dabei sind die Abläufe im Uhr-Steuergerät in den Figuren 2a bis c und die Abläufe im Steuergerät in den Figuren 3a bis c dargestellt.

Der Ablauf im Uhr-Steuergerät gliedert sich, wie aus Figur 2a ersichtlich, in zwei Schritte 20 und 30, nämlich "Empfang einer neuen Weckzeit" und "Vergleich der Weckzeit". Beide Schritte 20, 30 lassen sich, wie in Figuren 2b und 2c zu sehen, weiter untergliedern. Ein Ausführen des Schritts 20 führt in Schritt 21 zu einem Vergleich einer neuen Weckzeit mit einer gespeicherten Weckzeit und in Schritt 22 zu einem Abspeichern der neuen Weckzeit als gespeicherte Weckzeit, sofern der Vergleich ergab, daß die gespeicherte Weckzeit größer als die neue Weckzeit ist.

Ein Ausführen des Schritts 30 führt in Schritt 31 zu einem Vergleich einer aktuellen Zeit mit einer gespeicherten Weckzeit und falls die aktuelle Zeit größer oder gleich der gespeicherten Weckzeit ist zu den Schritten 31 und 32. Diese Schritte sorgen dafür, daß die aktuelle Zeit als Weckzeit gesendet wird und daß die gespeicherte Weckzeit auf einen vordefinierten Wert gesetzt wird.

Die abgesandte Weckzeit wird im Steuergerät in Schritt 50 empfangen und entsprechend den Schritten 51, 52 nd 53 verarbeitet, wie in Figuren 3a und 3c zu erkennen ist. Insbesondere wird in Schritt 51 verglichen, ob die gesendete aktuelle Zeit (Weckzeit) größer oder gleich der gespeicherten nächsten Weckzeit ist. Wenn ja, wird in Schritt 52 eine gewünschte Aktion ausgeführt. Wird in Schritt 53 erkannt, daß eine weitere nächste Weckzeit gespeichert ist, wird Schritt 40 ausgeführt, der im Senden dieser Weckzeit als neue Weckzeit an das Uhr-Steuergerät besteht.

Anhand eines Beispiels soll nun das Zusammenwirken von Steuergerät und Uhr-Steuergerät erläutert werden. Zunächst werden die beispielsweise manuell eingegebenen Weckzeiten im jeweiligen Steuergerät 3 im Speicher 11 gespeichert. Auf eine an alle Steuergeräte 3 gerichtete Anforderung nach einer neuen Weckzeit durch das Uhr-Steuergerät übertragen die Steuergeräte 3 die zeitlich nächste Weckzeit (Schritt 40) über den CAN-Bus 5 an das Uhr-Steuergerät 9. Die Vergleichs- und Auswahlvorrichtung 13 vergleicht die übertragenen Weckzeiten der Steuergeräte 3 (Schritt 20) und wählt die zeitlich nächste Weckzeit aus (Schritt 21 und 22). Lediglich dieses Datum wird dann im Speicher 11 des UhrSteuergeräts 9 abgelegt. Die anderen Zeitdaten bleiben unberücksichtigt.

Das Uhr-Steuergerät 9 führt nun ständig einen Vergleich (Schritt 30) der aktuellen Zeit mit der gespeicherten Weckzeit (Schritt 31) durch und sendet das aktuelle Zeitdatum (Schritt 32) über den CAN-Bus an alle Steuergeräte 3, sobald die aktuelle Zeit die gespeicherte Weckzeit erreicht hat. Gleichzeitig wird der Speicher 11 des Uhr-Steuergeräts 9 mit einem Wert, beispielsweise für die nächste volle Stunde, überschrieben (Schritt 33).

Das vom Uhr-Steuergerät abgesandte der aktuellen Zeit entsprechende Zeitdatum wird von jedem Steuergerät empfangen (Schritt 50) und mit der zeitlich nächsten gespeicherten Weckzeit verglichen (Schritt 51). Ist diese Weckzeit erreicht oder überschritten, führt das Steuergerät 3 die vorgesehene Aktion, beispielsweise das Einschalten der Standheizung, aus (Schritt 52) und löscht dann das entsprechende Zeitdatum aus dem Speicher. Sind weitere Weckzeiten in diesem Steuergerät 3 abgelegt (Schritt 53), so wird die zeitlich nächste Weckzeit an das Uhr-Steuergerät 9 übertragen (Schritt 40). Dies führt dann zu einer erneuten Weckzeit-Anforderung durch das Uhr-Steuergerät 9, so daß -wie bereits beschrieben- nach Übertragung dieser Daten erneut die zeitlich nächste Weckzeit aus den übertragenen Weckzeiten ausgewählt und gespeichert werden kann. Das Absenden einer Aufforderung läßt sich dann vermeiden, wenn jedes Steuergerät automatisch ohne Aufforderung sowohl bei der Übereinstimmung als auch bei Nichtübereinstimmung mit der übertragenen aktuellen Zeit die nächste Weckzeit abschickt.

Wird in einem Steuergerät zwischenzeitlich der angeforderte Weckvorgang nicht mehr benötigt, braucht diese Information dem Uhr-Steuergerät nicht mitgeteilt zu werden. Diese nicht mehr benötigte Weckzeit wird von diesem Steuergerät so behandelt, als ob sie von einem anderen Steuergerät angefordert worden wäre. Es findet dann also keine Aktion statt.

Der Vorteil des vorgenannten Verfahrens liegt somit darin, daß das Uhr-Steuergerät nurmehr eine Weckzeit/Datum speichert und verwaltet, unabhängig von der Anzahl der Steuergeräte und der dort gespeicherten Weckzeiten. Damit wird der Speicherbedarf geringer und die Software einfacher und zuverlässiger. Darüber hinaus läßt sich das System beliebig erweitern, ohne daß Änderungen in der Uhr-Steuergerät-Software notwendig wären.

## Patentansprüche

1. Verfahren zur Verwaltung von Weckzeiten in einem vernetzten Verbund aus mehreren Steuervorrichtungen und einer Uhr-Steuervorrichtung, **dadurch gekennzeichnet,** daß jede Steuervorrichtung (3) eine zeitlich nächste Weckzeit an die Uhr-Steuervorrichtung (9) überträgt, daß die übertragenen Weckzeiten miteinander verglichen werden und die zeitlich nächste Weckzeit von der Uhr-Steuervorrichtung (9) abgespeichert wird, und daß die Uhr-Steuervorrichtung (9) bei Erreichen der abgespeicherten Weckzeit die aktuelle Zeit an die Steuervorrichtungen (3) überträgt.

2. Verfahren nach Anspruch 1, **dadurch gekennzeichnet,** daß die Steuervorrichtungen (3) die gesendete aktuelle Zeit mit der gespeicherten nächsten Weckzeit vergleichen und bei Übereinstimmung die gewünschte Aktion auslösen.

3. Verfahren nach Anspruch 2, **dadurch gekennzeichnet,** daß die jeweilige Steuervorrichtung (3) bei Übereinstimmung mit der aktuellen Zeit die zeitlich nächste Weckzeit an die Uhr-Steuervorrichtung (9) überträgt, und daß die anderen Steuervorrichtungen (3) ebenfalls die zeitlich nächste Weckzeit übertragen.

4. Vernetzter Verbund aus mehreren Steuervorrichtungen und einer Uhr-Steuervorrichtung für ein Kraftfahrzeug, wobei jede Steuervorrichtung und die Uhr-Steuervorrichtung eine Speichervorrichtung zur Aufnahme von Weckzeiten umfaßt, **dadurch gekennzeichnet**, daß die Speichervorrichtung der Uhr-Steuervorrichtung (9) zur Aufnahme eines Weckzeit-Datums ausgelegt ist, und daß die Uhr-Steuervorrichtung (9) eine Vergleichs-und Auswahlvorrichtung (13) umfaßt, die die von den Steuervorrichtungen (3) übertragenen Weckzeiten vergleicht und die zeitlich nächste Weckzeit auswählt und der Speichervorrichtung zuführt.

## Claims

1. Method for managing wake-up times in a networked interconnection comprising a plurality of control apparatuses and a clock control apparatus, characterized in that each control apparatus (3) transmits a chronologically next wake-up time to the clock control apparatus (9), in that the transmitted wake-up times are compared with one another and the chronologically next wake-up time is stored by the clock control apparatus (9), and in that the clock control apparatus (9) transmits the current time to the control apparatuses (3) when the stored wake-up time is reached.

2. Method according to Claim 1, characterized in that the control apparatuses (3) compare the transmitted current time with the stored next wake-up time and trigger the desired action if they match.

3. Method according to Claim 2, characterized in that the respective control apparatus (3) transmits the chronologically next wake-up time to the clock control apparatus (9) when the current time is matched, and in that the other control apparatuses (3) likewise transmit the chronologically next wake-up time.

4. Networked interconnection comprising a plurality of control apparatuses and a clock control apparatus for a motor vehicle, each control apparatus and the clock control apparatus comprising a memory apparatus for holding wake-up times, characterized in that the memory apparatus of the clock control apparatus (9) is designed to hold a wake-up time date, and in that the clock control apparatus (9) comprises a comparison and selection apparatus (13) which compares the wake-up times transmitted by the control apparatuses (3) and selects the chronologically next wake-up time and supplies it to the memory apparatus.

## Revendications

1. Procédé de gestion des temps de réveil dans une combinaison en réseau formée de plusieurs dispositifs de commande et d'un dispositif de commande-horloge,
caractérisé en ce que
• chaque dispositif de commande (3) transmet un temps de réveil suivant chronologiquement, au dispositif de commande-horloge (9),
• les temps de réveil transmis sont comparés entre eux et le temps de réveil suivant chronologiquement est mémorisé par le dispositif de commande-horloge ( 9), et
• le dispositif de commande-horloge (9), lorsqu'il atteint le temps de réveil mémorisé, transmet le temps actuel aux dispositifs de commande (3).

2. Procédé selon la revendication 1,
caractérisé en ce que
les dispositifs de commande (3) comparent le temps actuel émis avec le temps de réveil suivant, mémorisé et en cas de concordance, déclenchent l'action souhaitée.

3. Procédé selon la revendication 2,
caractérisé en ce que
le dispositif de commande (3) respectif, en cas de concordance avec le temps actuel, transmet le temps de réveil suivant chronologiquement, au dispositif de commande-horloge (9), et les autres dispositifs de commande (3) transmettent également le temps de réveil suivant chronologiquement.

4. Combinaison en réseau formée de plusieurs dispositifs de commande et d'un dispositif de commande-horloge pour un véhicule automobile,
chaque dispositif de commande et le dispositif de commande-horloge comprenant un dispositif à mémoire pour enregistrer les temps de réveil,
caractérisée en ce que
• le dispositif de mémoire du dispositif de commande-horloge (9) est conçu pour une donnée de temps de réveil, et
• le dispositif de commande-horloge (9) comprend un dispositif de comparaison et de sélection (13) qui compare les temps de réveil transmis par les dispositifs de commande (3) et sélectionne le temps de réveil suivant chronologiquement, pour l'appliquer au dispositif de mémoire.
